# FASCICULE DE BREVET EUROPEEN

(11) **EP 2 661 379 B1**
(45) Date de publication et mention de la délivrance du brevet: **19.11.2014**
(21) Numéro de dépôt: 11815491.3
(22) Date de dépôt: 20.12.2011
(51) Int. Cl.: B60J 1/12

(54) **DISPOSITIF POUR POSITIONNER LA VITRE D'UNE PORTE LATERALE DE VEHICULE AUTOMOBILE PAR RAPPORT A UNE COMMANDE D'OUVERTURE EXTERIEURE DE CETTE PORTE**
VORRICHTUNG ZUM POSITIONIEREN DES FENSTERS EINER FAHRZEUGSEITENTÜR IN BEZUG ZU EINER EXTERNEN STEUERUNG ZUM ÖFFNEN DER TÜR
DEVICE FOR POSITIONING THE WINDOW OF A SIDE DOOR OF A VEHICLE RELATIVE TO AN EXTERNAL CONTROL FOR OPENING SAID DOOR

(30) Priorité: 06.01.2011 FR 1150108
(43) Date de publication de la demande: 13.11.2013
(73) Titulaire: Peugeot Citroën Automobiles SA, 78140 Vélizy Villacoublay (FR)
(72) Inventeur: FORTERRE, Sylvain, F-25200 Grand Charmont (FR); CHOFFEL, Cédric, F-90340 Chevremont (FR); BONJEAN, Sébastien, F-90000 Belfort (FR)
(86) Numéro de dépôt international: PCT/FR2011/053119
(87) Numéro de publication internationale: WO 2012/093220

(56) Documents cités:
- EP-A2- 1 462 284
- DE-A1-102007 009 115
- FR-A1- 2 927 925

## Description

La présente invention concerne un dispositif pour positionner un bord d'une vitre d'une porte latérale de véhicule automobile sur un bord d'un support de commande d'ouverture extérieure de ladite porte latérale, comme par example montré dans le brevet EP 1462284

L'invention concerne également une porte latérale d'un véhicule automobile équipée d'une commande d'ouverture extérieure, disposée entre la vitre et l'encadrement de la porte, le bord de la vitre étant positionné par rapport au bord du support de la commande d'ouverture extérieure au moyen d'un dispositif selon l'invention.

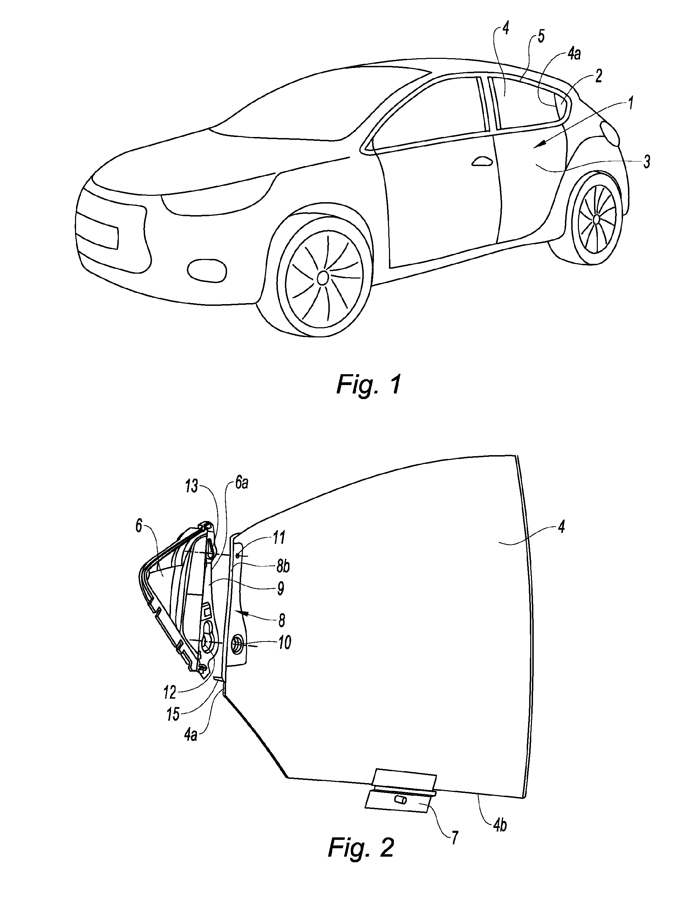

La figure 1 montre en perspective un véhicule automobile dont la porte arrière 1 est équipée d'une commande d'ouverture extérieure 2.

Cette commande d'ouverture extérieure 2, au lieu d'être placée sur le panneau 3 de la porte, est disposée entre le bord arrière de la vitre 4 et la partie arrière de l'encadrement 5 de la porte.

Cette disposition confère au véhicule l'apparence d'un coupé à deux portes latérales étant donné que les portes arrière sont pratiquement invisibles du fait que leur panneau 3 est dépourvu de commande d'ouverture.

Cette disposition déportée de la commande d'ouverture extérieure d'une porte latérale de véhicule automobile a été décrite par exemple dans les brevets US 4 956 943 et 5 316 364.

La commande d'ouverture extérieure comprend de façon connue un support fixe sur lequel est montée une poignée pivotante accessible aux utilisateurs.

La difficulté est de pouvoir positionner le bord de la vitre sur le bord du support ci-dessus d'une manière précise et répétitive pour satisfaire les exigences sur le plan des jeux et affleurements, tout en limitant le nombre de pièces et la durée du montage pour réduire les coûts.

Le but de la présente invention est précisément d'atteindre les objectifs ci-dessus.

Ce but est atteint, selon l'invention, grâce à un dispositif pour positionner un bord d'une vitre d'une porte latérale de véhicule automobile sur un bord d'un support de commande d'ouverture extérieure de ladite porte latérale, caractérisé en ce que le bord de ladite vitre porte une pièce dont l'une des faces est destinée à recouvrir une face adjacente au bord dudit support, ladite face de ladite pièce et ladite face du support comportant des moyens d'indexage complémentaires pouvant s'engager les uns dans les autres pour appliquer lesdites faces, l'une sur l'autre.

Ces moyens d'indexage permettent de positionner la vitre par rapport au support, suivant trois directions perpendiculaires, garantissant ainsi un montage précis et répétitif.

Dans un mode de réalisation préféré de l'invention, lesdits moyens d'indexage complémentaires comprennent des pions faisant saillie sur l'une desdites faces et des évidements complémentaires réalisés sur l'autre face.

Ces pions peuvent ainsi s'engager dans les évidements complémentaires pour positionner avec précision la vitre par rapport au support de la commande d'ouverture de la porte.

De préférence, lesdits évidements comprennent chacun une partie élargie et une partie rétrécie, la partie élargie ayant des dimensions plus importantes que la section transversale du pion destiné à s'engager dans cette partie et la partie rétrécie ayant des dimensions sensiblement égales à la section dudit pion.

La partie élargie de chaque évidement facilite l'engagement du pion dans l'évidement et la partie rétrécie de l'évidement dans laquelle s'engage, après coulissement, le pion permet de réaliser un positionnement précis de celui-ci dans l'évidement.

Dans une version préférée de l'invention, les pions font saillie sur la face de la pièce portée par la vitre et les évidements sont réalisés sur la face du support.

De préférence également, ladite face du support comporte un épaulement destiné à prendre appui sur le bord de la pièce portée par la vitre.

Cet appui permet de supprimer tout jeu entre le support et le bord de la vitre.

Selon une autre particularité avantageuse de l'invention, lesdits évidements sont allongés dans une direction inclinée par rapport audit épaulement, de telle sorte que lorsque les pions sont engagés dans ces évidements, ceux-ci puissent guider le déplacement du bord de la pièce portée par la vitre vers ledit épaulement.

Dans un mode de réalisation également avantageux, le bord de la pièce portée par la vitre comporte une butée coopérant avec une extrémité de la face dudit support pour limiter le déplacement de la vitre par rapport au support.

De préférence également, le support comporte des moyens pour le maintenir sur une partie fixe de la porte lors du positionnement de la vitre par rapport au support et des moyens pour fixer définitivement le support à la partie fixe de la porte.

Ces dispositions facilitent le montage de la vitre par rapport au support de la commande d'ouverture de la porte.

Lesdits moyens pour maintenir le support peuvent comprendre un crochet pouvant s'accrocher sur l'encadrement de la porte.

Selon un autre aspect, l'invention concerne également une porte latérale d'un véhicule automobile équipée d'une commande d'ouverture extérieure, disposée entre la vitre et l'encadrement de la porte, le bord de la vitre étant positionné par rapport au bord du support de la commande d'ouverture extérieure au moyen d'un dispositif selon l'invention.

D'autres particularités et avantages de l'invention apparaîtront encore tout au long de la description ci-après.

Aux dessins annexés, donnés à titre d'exemples, non limitatifs :
- la figure 2 est une vue éclatée montrant la vitre d'une porte arrière d'un véhicule automobile et un support de commande d'ouverture,
- la figure 3 est une vue à plus grande échelle du support et d'une partie de la vitre, représentés sur la figure 1,
- la figure 4 est une vue analogue à la figure 3, montrant la face opposée du support et de la vitre,
- la figure 5 est une vue analogue à la figure 4, montrant le bord de la vitre positionné sur le bord du support.

La figure 2 représente la vitre arrière 4 d'une porte latérale arrière d'un véhicule automobile, telle que la porte 1 représentée sur la figure 1.

Le support 6 de commande d'ouverture extérieure de la porte ci-dessus est destiné à être placé, comme montré sur la figure 1, entre le bord arrière 4a de la vitre 4 et la partie arrière de l'encadrement 5 de la porte.

La vitre 4 est après son montage sur la porte, fixe par rapport à celle-ci.

Sur la figure 2, la référence 7 désigne un support qui est destiné à supporter le bord inférieur 4b de la vitre 4.

Le support 6 est moulé d'une seule pièce en matière plastique.

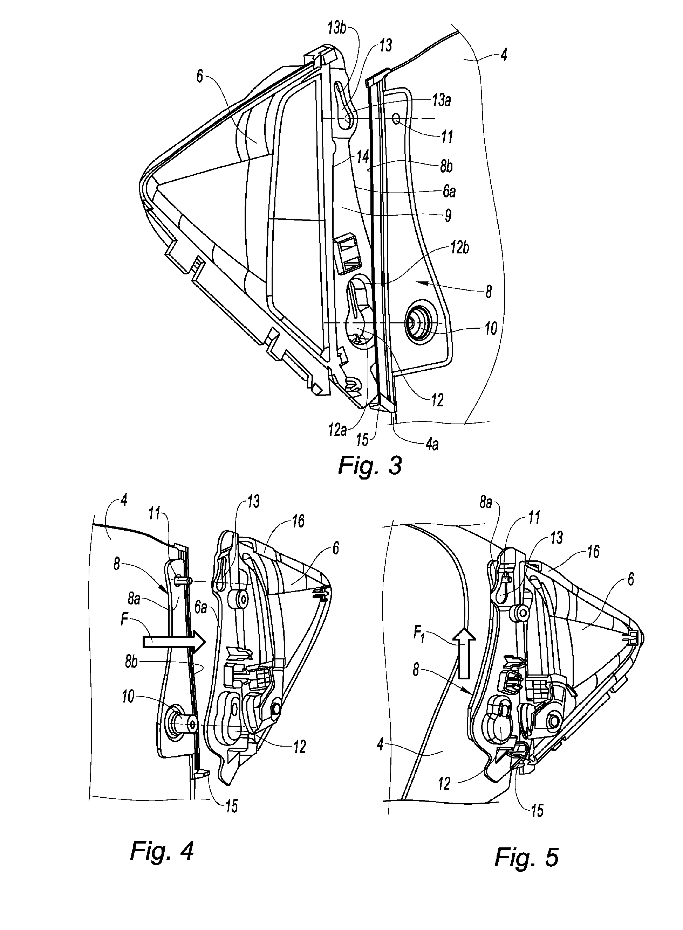

Les figures 2 et 3 montrent la face intérieure du support 6 et les figures 4 et 5 montrent la face extérieure de ce support 6.

La face extérieure de ce support 6 est destinée à recevoir une poignée pivotante (non représentée) accessible aux utilisateurs.

Conformément à l'invention, le bord 4a de la vitre 4 porte une pièce surmoulée 8 dont l'une 8a des faces (voir figure 4) est destinée à recouvrir (voir figures 2 et 3) une face 9 adjacente au bord 6a du support 6.

La face 8a de la pièce surmoulée 8 et la face 9 du support 6 comportent des moyens d'indexage complémentaires pouvant s'engager les uns dans les autres pour appliquer les faces 8a et 9, l'une sur l'autre, comme montré sur les figures 4 et 5.

Dans l'exemple représenté sur les figures 2 à 5, les moyens d'indexage complémentaires ci-dessus comprennent des pions 10 et 11 faisant saillie sur l'une des faces 8a et 9 et des évidements complémentaires 12, 13 réalisés sur l'autre face.

Ces évidements 12, 13 comprennent chacun une partie élargie 12a, 13a et une partie rétrécie 12b, 13b.

La partie élargie 12a, 13a a des dimensions plus importantes que la section transversale du pion 10, 11 destiné à s'engager dans cette partie 12a, 13a et la partie rétrécie 12b, 13b a des dimensions sensiblement égales à la section du pion 10, 11.

Les évidements 12, 13 présentent ainsi la forme d'un trou de serrure.

Dans l'exemple représenté, les pions 10, 11 font saillie sur la face 8a de la pièce 8 portée par la vitre 4 et les évidements 12, 13 sont réalisés sur la face 9 du support 6.

Ces pions 10, 11 et les évidements 10, 11 sont moulés respectivement sur la pièce surmoulée 8 et le support 6.

Les pions 10, 11 traversent l'épaisseur de la vitre 4 pour assurer une liaison rigide entre la vitre 4 et la pièce surmoulée 8.

Par ailleurs, la face 9 du support 6 comporte, comme montré sur les figures 2 et 3, un épaulement 14 destiné à prendre appui sur le bord 8b de la pièce 8 portée par la vitre 4.

La figure 3 montre en outre que les évidements 12, 13 sont allongés dans une direction inclinée par rapport à l'épaulement 14 du support 6, de telle sorte que lorsque les pions 10, 11 sont engagés dans ces évidements 12, 13, ceux-ci puissent guider le déplacement du bord 8b de la pièce 8 portée par la vitre 4 vers cet épaulement 14.

Par ailleurs, les figures 2 à 5 montrent que le bord 8b de la pièce 8 portée par la vitre 4 comporte une butée 15 coopérant avec une extrémité de la face 9 du support 6 pour limiter le déplacement de la vitre 4 par rapport au support 6.

Le support 6 comporte des moyens pour le maintenir sur l'encadrement 5 de la porte 1 lors du positionnement de la vitre 4 par rapport au support 6 et des moyens pour fixer définitivement le support 6 à l'encadrement de la porte 1.

Dans l'exemple montré sur les figures 4 et 5 ces moyens pour maintenir le support 6 comprennent un crochet 16 pouvant s'accrocher sur l'encadrement 5 de la porte 1.

On va maintenant décrire le montage de la vitre 4 et le support 6 sur la porte 1.

On monte tout d'abord le support 6 sur la partie arrière de l'encadrement 5 de la porte 1, sans fixer ce support 6 simplement en l'accrochant à l'aide du crochet 16.

On monte ensuite la vitre 4 sur la porte 1.

Lors du montage de la vitre 4, on engage les pions 10, 11 solidaires de la pièce 8 dans les parties élargies 12a, 13a des évidements du support 6, comme montré par la flèche F de la figure 4.

La face 8a de la pièce 8 recouvre alors la face 9 du support 6.

On déplace la vitre 4 dans le sens de la flèche F1 montrée sur la figure 5 pour que les pions 10, 11 s'engagent dans les parties rétrécies 12b, 13b des évidements du support 6.

Lors de ce déplacement, le bord 8b de la pièce 8 portée par la vitre 4 est guidé vers l'épaulement 14 du support 6.

La vitre 4 est alors parfaitement indexée par rapport au support 6.

Il suffit ensuite de fixer définitivement le support 6 à l'encadrement 5 de la porte 1 à l'aide de vis ou autre moyen.

## Revendications

1. Dispositif pour positionner un bord (4a) d'une vitre (4) d'une porte latérale (1) de véhicule automobile sur un bord (6a) d'un support (6) de commande d'ouverture extérieure de ladite porte latérale, **caractérisé en ce que** le dispositif comprend une pièce (8), cette pièce étant portée par le bord (4a) de ladite vitre (4), l'une (8a) des faces de ladite pièce (8) étant destinée à recouvrir une face (9) adjacente au bord (6a) dudit support (6), ladite face (8a) de ladite pièce (8) et ladite face (9) du support (6) comportant des moyens d'indexage complémentaires (10, 11 ; 12, 13) pouvant s'engager les uns dans les autres pour appliquer lesdites faces (8a, 9), l'une sur l'autre.

2. Dispositif selon la revendication 1, **caractérisé en ce que** lesdits moyens d'indexage complémentaires comprennent des pions (10, 11) faisant saillie sur l'une desdites faces (8a, 9) et des évidements complémentaires (12, 13) réalisés sur l'autre face.

3. Dispositif selon la revendication 2, **caractérisé en ce que** lesdits évidements (12, 13) comprennent chacun une partie élargie (12a, 13a) et une partie rétrécie (12b, 13b), la partie élargie (12a, 13a) ayant des dimensions plus importantes que la section transversale du pion (10, 11) destiné à s'engager dans cette partie et la partie rétrécie (12b, 13b) ayant des dimensions sensiblement égales à la section dudit pion (10, 11).

4. Dispositif selon l'une des revendications 2 ou 3, **caractérisé en ce que** les pions (10, 11) font saillie sur la face (8a) de la pièce (8) portée par la vitre (4) et les évidements (12, 13) sont réalisés sur la face (9) du support (6).

5. Dispositif selon la revendication 4, **caractérisé en ce que** ladite face (9) du support (6) comporte un épaulement (14) destiné à prendre appui sur le bord (8b) de la pièce (8) portée par la vitre (4).

6. Dispositif selon la revendication 5, **caractérisé en ce que** lesdits évidements (12, 13) sont allongés dans une direction inclinée par rapport audit épaulement (14) de telle sorte que lorsque les pions (10, 11) sont engagés dans ces évidements (12, 13), ceux-ci puissent guider le déplacement du bord (8b) de la pièce (8) portée par la vitre (4) vers ledit épaulement (14).

7. Dispositif selon la revendication 6, **caractérisé en ce que** le bord (8b) de la pièce (8) portée par la vitre (4) comporte une butée (15) coopérant avec une extrémité de la face (9) dudit support (6) pour limiter le déplacement de la vitre (4) par rapport au support (6).

8. Dispositif selon l'une des revendications 1 à 7, **caractérisé en ce que** le support (6) comporte des moyens pour le maintenir sur une partie fixe de la porte, lors du positionnement de la vitre (4) par rapport au support (6) et des moyens pour fixer définitivement le support (6) à la partie fixe de la porte.

9. Dispositif selon la revendication 8, **caractérisé en ce que** lesdits moyens pour maintenir le support (6) comprennent un crochet (16) pouvant s'accrocher sur l'encadrement (5) de la porte (1).

10. Porte latérale d'un véhicule automobile équipée d'une commande d'ouverture extérieure, disposée entre la vitre (4) et l'encadrement (5) de la porte, le bord de la vitre (4) étant positionné par rapport au bord du support (6) de la commande d'ouverture extérieure au moyen d'un dispositif selon l'une des revendications 1 à 9.

## Patentansprüche

1. Vorrichtung zum Positionieren eines Rands (4a) einer Fensterscheibe (4) einer Kraftfahrzeugseitentür (1) auf einem Rand (6a) eines Trägers (6) zur externen Öffnungssteuerung der Seitentür, **dadurch gekennzeichnet, dass** die Vorrichtung ein Teil (8) umfasst, wobei dieses Teil von dem Rand (4a) der Fensterscheibe (4) getragen wird, wobei eine der Seiten (8a) des Teils (8) dazu bestimmt ist, eine mit dem Rand (6a) des Trägers (6) benachbarte Seite (9) abzudecken, wobei die Seite (8a) des Teils (8) und die Seite (9) des Trägers (6) komplementäre Positionierungsmittel (10, 11; 12, 13) umfassen, die ineinander eingreifen können, um die Seiten (8a, 9) aufeinander zu legen.

2. Vorrichtung nach Anspruch 1, **dadurch gekennzeichnet, dass** die komplementären Positionierungsmittel Stifte (10, 11) umfassen, die auf einer der Seiten (8a, 9) vorstehen, und komplementäre Aussparungen (12, 13), die auf der anderen Seite hergestellt sind.

3. Vorrichtung nach Anspruch 2, **dadurch gekennzeichnet, dass** die Aussparungen (12, 13) jeweils einen erweiterten Teil (12a, 13a) und einen verjüngten Teil (12b, 13b) umfassen, wobei der erweiterte Teil (12a, 13a) Maße hat, die größer sind als der Querschnitt des Stifts (10, 11), der dazu bestimmt ist, sich in diesen Teil einzufügen, und der verjüngte Teil (12b, 13b) Maße hat, die im Wesentlichen gleich dem Querschnitt des Stifts (10, 11) sind.

4. Vorrichtung nach einem der Ansprüche 2 oder 3, **dadurch gekennzeichnet, dass** die Stifte (10, 11) auf der Seite (8a) des Teils (8), das von der Fensterscheibe (4) getragen wird, vorstehen und die Aussparungen (12, 13) auf der Seite (9) des Trägers (6) hergestellt sind.

5. Vorrichtung nach Anspruch 4, **dadurch gekennzeichnet, dass** die Seite (9) des Trägers (6) einen Ansatz (14) umfasst, der dazu bestimmt ist, auf dem Rand (8b) des Teils (8), das von der Fensterscheibe (4) getragen wird, aufzuliegen.

6. Vorrichtung nach Anspruch 5, **dadurch gekennzeichnet, dass** die Aussparungen (12, 13) in eine schräge Richtung in Bezug auf den Ansatz (14) derart gestreckt sind, dass, wenn die Stifte (10, 11) in diese Aussparungen (12, 13) eingreifen, diese die Bewegung des Rands (8b) des Teils (8), das von der Fensterscheibe (4) getragen wird, zu dem Ansatz (14) führen können.

7. Vorrichtung nach Anspruch 6, **dadurch gekennzeichnet, dass** der Rand (8b) des Teils (8), das von der Fensterscheibe (4) getragen wird, einen Anschlag (15) umfasst, der mit einem Ende der Seite (9) des Trägers (6) zusammenwirkt, um die Bewegung der Fensterscheibe (4) in Bezug auf den Träger (6) einzuschränken.

8. Vorrichtung nach einem der Ansprüche 1 bis 7, **dadurch gekennzeichnet, dass** der Träger (6) Mittel umfasst, um ihn auf einem stationären Teil der Tür beim Positionieren der Fensterscheibe (4) in Bezug auf den Träger (6) zu halten, und Mittel, um den Träger (6) endgültig an dem stationären Teil der Tür zu befestigen.

9. Vorrichtung nach Anspruch 8, **dadurch gekennzeichnet, dass** die Mittel zum Halten des Trägers (6) einen Haken (16) umfassen, der sich auf dem Rahmen (5) der Tür (1) einhängen kann.

10. Seitentür eines Kraftfahrzeugs, die mit einer externen Öffnungssteuerung ausgestattet ist, die zwischen der Fensterscheibe (4) und dem Rahmen (5) der Tür angeordnet ist, wobei der Rand der Fensterscheibe (4) in Bezug auf den Rand des Trägers (6) der externen Öffnungssteuerung mittels einer Vorrichtung nach einem der Ansprüche 1 bis 9 positioniert ist.

## Claims

1. A device for positioning an edge (4a) of a window (4) of a motor vehicle side door (1) onto an edge (6a) of a mounting (6) for an external control for opening the said side door, **characterized in that** the device includes a part (8), this part being carried by the edge (4a) of the said window (4), one (8a) of the faces of the said part (8) being intended to cover a face (9) adjacent to the edge (6a) of the said mounting (6), the said face (8a) of the said part (8) and the said face (9) of the mounting (6) comprising complementary indexing means (10, 11; 12, 13) able to engage into one another to apply the said faces (8a, 9) on one another.

2. The device according to Claim 1, **characterized in that** the said complementary indexing means include pins (10, 11) projecting on one of the said faces (8a, 9) and complementary recesses (12, 13) formed on the other face.

3. The device according to Claim 2, **characterized in that** the said recesses (12, 13) each include a widened portion (12a, 13a) and a narrowed portion (12b, 13b), the widened portion (12a, 13a) having greater dimensions than the transverse section of the pin (10, 11) intended to engage in this portion and the narrowed portion (12b, 13b) having dimensions substantially equal to the section of the said pin (10, 11) .

4. The device according to one of Claims 2 or 3, **characterized in that** the pins (10, 11) project on the face (8a) of the part (8) carried by the window (4) and the recesses (12, 13) are formed on the face (9) of the mounting (6).

5. The device according to Claim 4, **characterized in that** the said face (9) of the mounting (6) comprises a shoulder (14) intended to rest on the edge (8b) of the part (8) carried by the window (4).

6. The device according to Claim 5, **characterized in that** the said recesses (12, 13) are elongated in an inclined direction with respect to the said shoulder (14), such that when the pins (10, 11) are engaged in these recesses (12, 13), these can guide the displacement of the edge (8b) of the part (8) carried by the window (4) towards the said shoulder (14).

7. The device according to Claim 6, **characterized in that** the edge (8b) of the part (8) carried by the window (4) comprises a stop (15) cooperating with an end of the face (9) of the said mounting (6) to limit the displacement of the window (4) with respect to the mounting (6).

8. The device according to one of Claims 1 to 7, **characterized in that** the mounting (6) comprises means for holding it on a fixed part of the door, during the positioning of the window (4) with respect to the mounting (6), and means for permanently fixing the mounting (6) to the fixed part of the door.

9. The device according to Claim 8, **characterized in that** the said means for holding the mounting (6) include a hook (16) able to hook itself on the frame (5) of the door (1).

10. A side door of a motor vehicle equipped with an external opening control, disposed between the window (4) and the frame (5) of the door, the edge of the window (4) being positioned with respect to the edge of the mounting (6) of the external opening control by means of a device according to one of Claims 1 to 9.
